# EUROPEAN PATENT APPLICATION

(11) **EP 0 827 708 A1**
(43) Date of publication of application: **11.03.1998**
(21) Application number: 97115111.3
(22) Date of filing: 01.09.1997
(51) Int. Cl.: A47J 41/00

(54) **Thermally insulated synthetic resin container and thermally insulated synthetic resin lid**

(30) Priority: 06.09.1996 JP 237073/96
(71) Applicant: NIPPON SANSO CORPORATION, Tokyo 105 (JP)
(72) Inventor: Fujii, Takafumi, Minato-ku, Tokyo 105 (JP); Yamada, Masashi, Minato-ku, Tokyo 105 (JP); Furuyama, Kensuke, Minato-ku, Tokyo 105 (JP); Tanaka, Atsuhiko, Minato-ku, Tokyo 105 (JP); Kamachi, Hidefumi, Minato-ku, Tokyo 105 (JP)
(74) Representative: Munk, Ludwig, Dipl.-Ing.

(57) **Abstract**

A thermally insulated synthetic resin container (1) comprising an inner container (2) and an outer container (3,4) with a thermoinsulating layer (6) therebetween, wherein one of the inner container and the outer container is formed by means of multilayer molding, and wherein the other container, which is not formed by multilayer molding, consists of the two wall elements (3,4) which conform with each other, and a thermally insulated synthetic resin lid (21) comprising a top surface wall (23,24) and a bottom surface (22) wall with a thermoinsulating layer (26) therebetween, wherein one of the top surface wall and the bottom surface wall is formed by means of multilayer molding, and wherein the other wall, which is not formed by multilayer molding, consists of the two wall elements (23,24) which conform with each other, do not require the formation of a plating film, have high thermal insulation capabilities and exceptional durability, are easy to manufacture, low in cost, and allow easy recovery of synthetic resins.

## Description

### BACKGROUND OF THE INVENTION

### Technical Field of the Invention

The present invention relates to a thermally insulated synthetic resin container and thermally insulated synthetic resin lid having thermoinsulating layers filled with a low thermoconductive gas, and specifically to a thermally insulated synthetic resin container and a thermally insulated synthetic resin lid for the purposes of warmth preservation and cold preservation in thermally insulated food vessels, cooler boxes, ice boxes, thermally insulated cup, and lunch jars.

### Background Art

As an example of a thermally insulated synthetic resin container proposed in the past, there is a type of thermally insulated container formed by molding an inner container and an outer container from synthetic resin material, having the inner container inside the outer container while leaving a space portion therebetween, and filling this space portion with at least one type of gas selected from among xenon, krypton and argon.

In order to increase their gas-barrier capabilities, these thermally insulated synthetic resin containers have plating films formed on the outer surface of the inner container or the inner surface of the outer container.

When these types of plating films are formed on resins onto which the plating films can be directly formed, the inner surface of the inner container, the outer surface of the outer container and the joint surface between the inner and outer containers must be masked to prevent them from becoming plated. Since this type of masking requires high precision in their locations of formation, the masking costs are high and the electrical plating after masking is also expensive.
Additionally, when forming masks, plating films can adhere to places where the mask coating has not attached or has peeled so as to blemish the appearance, and there is an influence on cost, freedom of design and durability due to the necessity for extra care with regard to safety of the mask coating and maintenance of the adherence to the resin.

In the case of resins on which plating films cannot be directly formed, the necessity for pre-treatments such as coating with ABS resins and the like to form the plating film results in cost increases.

Additionally, there is a restriction on the types of resins which can be used in order to increase the adherence of the plating film, so that some properties such as hardness and alkaline resistance of the synthetic resin must be sacrificed.

Furthermore, forming a plating film causes the synthetic resin to become unrecoverable in the event of recycling during manufacturing and disposal, thus increasing the cost.

Moreover, when using synthetic resins with high gas-barrier capabilities in forming thermally insulated containers, these types of resins are generally prone to absorb moisture and this moisture absorption results in reductions in the original gas-barrier function, so that the required capabilities cannot be obtained. Additionally, depending on the type of resin, there are problems such as having inadequate mechanical strength from the outset, or having reduced mechanical strength due to moisture absorption in the cases of resins which are highly moisture absorbent.

### SUMMARY OF THE INVENTION

The present invention offers a thermally insulated synthetic resin container and lid which do not require the formation of a plating film, have high thermal insulation capabilities and exceptional durability, are easy to manufacture, low in cost, and allow easy recovery of synthetic resins.

The first embodiment of the thermally insulated synthetic resin container according to the present invention comprises an inner container which is multilayer molded from different synthetic resin materials, and an outer container comprising an inner wall element and an outer wall element which covers the outside of the inner wall element; wherein the inner container and the inner wall element of the outer container are joined together so that the inner container is accommodated inside the inner wall element of the outer container with a space provided therebetween; wherein a thermoinsulating layer is formed by filling the space with at least one low thermoconductive gas selected from the group consisting of xenon, krypton, and argon; and wherein the outer wall element of the outer container and the inner container are joined at their end portions.

The inner container may be formed by two-color molding to form a bilayer consisting of an inner layer and an outer layer, the inner layer and the outer layer being formed of different synthetic resin materials; wherein the outer layer of the inner container and the inner wall element of the outer container are formed of a gas-barrier resin, and the inner layer of the inner container and the outer wall element of the outer container are formed of a moisture resistant resin.

Alternatively, the inner container may be formed by sandwich molding so as to have an outer layer, an inner layer, and an intermediate layer formed between the inner and outer layers, the inner and outer layers being formed of a different synthetic resin material from that forming the intermediate layer; wherein the inner and outer layers of the inner container and the outer wall element of the outer container are formed of a moisture resistant resin, and the intermediate layer of the inner container and the inner wall element of the outer container are formed of a gas-barrier resin.

The second embodiment of the thermally insulated synthetic resin container according to the present invention comprises an outer container which is multilayer molded from different synthetic resin materials, and an inner container comprising an outer wall element and an inner wall element which covers the inside of the outer wall element; wherein the outer container and the outer wall element of the inner container are joined together so that the outer wall element of the inner container is accommodated inside of the outer container with a space provided therebetween; wherein a thermoinsulating layer is formed by filling the space with at least one low thermoconductive gas selected from the group consisting of xenon, krypton, and argon; and wherein the inner wall element of the inner container and the outer container are joined at their end portions.

The outer container may be formed by two-color molding to form a bilayer consisting of an inner layer and an outer layer, the inner layer and the outer layer being formed of different synthetic resin materials; wherein the inner layer of the outer container and the outer wall element of the inner container are formed of a gas-barrier resin, and the outer layer of the outer container and the inner wall element of the inner container are formed of a moisture resistant resin.

Alternatively, the outer container may be formed by sandwich molding so as to have an outer layer, an inner layer, and an intermediate layer formed between the inner and outer layers, the inner and outer layers being formed of a different synthetic resin material from that forming the intermediate layer; wherein the inner and outer layers of the outer container and the inner wall element of the inner container are formed of a moisture resistant resin, and the intermediate layer of the outer container and the outer wall element of the inner container are formed of a gas-barrier resin.

The above double-walled container comprising the multilayer-molded container and the other container, wherein a gas-barrier resin is employed as a layer in contact with the thermoinsulating layer of the multilayer-molded container and as a wall element in contact with the thermoinsulating layer of the other container, does not require the formation of a plating film, has high thermal insulation capabilities and exceptional durability, is easy to manufacture, low in cost, and allows easy recovery of synthetic resins.

The first embodiment of the thermally insulated synthetic resin lid according to the present invention comprises a bottom surface wall which is multilayer molded from different synthetic resin materials, and a top surface wall comprising a bottom wall element and a top wall element which covers the upside of the bottom wall element; wherein the bottom surface wall and the bottom wall element of the top surface wall are joined together with a space provided therebetween; wherein a thermoinsulating layer is formed by filling the space with at least one low thermoconductive gas selected from the group consisting of xenon, krypton, and argon; and wherein the top wall element of the top surface wall and the bottom surface wall are joined at their end portions.

The bottom surface wall may be formed by two-color molding to form a bilayer consisting of an upper layer and a lower layer, the upper layer and the lower layer being formed of different synthetic resin materials; wherein the upper layer of the bottom surface wall and the bottom wall element of the top surface wall are formed of a gas-barrier resin, and the lower layer of the bottom surface wall and the top wall element of the top surface wall are formed of a moisture resistant resin.

Alternatively, the bottom surface wall may be formed by sandwich molding so as to have an upper layer, a lower layer, and an intermediate layer formed between the upper and lower layers, the upper and lower layers being formed of a different synthetic resin material from that forming the intermediate layer; wherein the upper and lower layers of the bottom surface wall and the top wall element of the top surface wall are formed of a moisture resistant resin, and the intermediate layer of the bottom surface wall and the bottom wall element of the top surface wall are formed of a gas-barrier resin.

The second embodiment of the thermally insulated synthetic resin container according to the present invention comprises a top surface wall which is multilayer molded from different synthetic resin materials, and a bottom surface wall comprising a top wall element and a bottom wall element which covers the bottom side of the top wall element; wherein the top surface wall and the top wall element of the bottom surface wall are joined together with a space provided therebetween; wherein a thermoinsulating layer is formed by filling the space with at least one low thermoconductive gas selected from the group consisting of xenon, krypton, and argon; and wherein the bottom `wall element of the bottom surface wall and the top surface wall are joined at their end portions.

The top surface wall may be formed by two-color molding to form a bilayer consisting of an upper layer and a lower layer, the upper layer and the lower layer being formed of different synthetic resin materials; wherein the lower layer of the top surface wall and the top wall element of the bottom surface wall are formed of a gas-barrier resin, and the upper layer of the top surface wall and the bottom wall element of the bottom surface wall are formed of a moisture resistant resin.

Alternatively, the top surface wall may be formed by sandwich molding so as to have an upper layer, a lower layer, and an intermediate layer formed between the upper and lower layers, the upper and lower layers being formed of a different synthetic resin material from that forming the intermediate layer; wherein the upper and lower layers of the top surface wall and the bottom wall element of the bottom surface wall are formed of a moisture resistant resin, and the intermediate layer of the top surface wall and the top wall element of the bottom surface wall are formed of a gas-barrier resin.

The above double-walled lid comprising the multilayer molded wall and the other wall, wherein a gas-barrier resin is employed as a layer in contact with the thermoinsulating layer of the multilayer-molded wall and as a wall element in contact with the thermoinsulating layer of the other wall, does not require the formation of a plating film, has high thermal insulation capabilities and exceptional durability, is easy to manufacture, low in cost, and allows easy recovery of synthetic resins.

By employing a gas barrier resin as the layer in contact with the insulating layer and a moisture resin as the layer in contact with the external atmosphere in the multilayer molding of the above container or the lid, and by employing a gas barrier resin as the wall element in contact with the insulating layer and a moisture resistant resin as the wall element in contact with the external atmosphere in the other of the above double-walled container (or lid), the layer or the wall element formed of a gas barrier resin can be protected by the layer or the wall element which is in contact with the external atmosphere and formed of a moisture resistant resin, problems of high moisture absorbency of a gas barrier resin and a deterioration of the gas barrier properties and mechanical strength due to absorption of moisture by the gas-barrier resin can be solved.

In addition, when the above multi-layer molding is conducted by sandwich molding so as to have an inner layer, an outer layer, and an intermediate layer formed between the inner and outer layers, or by sandwich molding so as to have an upper layer, a lower layer, and an intermediate layer formed between the upper and lower layers, the intermediate layer being formed of a gas-barrier resin, and the inner and outer layers or the upper and lower layers being formed of a moisture resistant resin, absorption of moisture by the high gas-barrier synthetic resin is prevented for a period of storage.

In addition, according to the present invention, as one of the inner and outer containers, or one of the top and bottom surface walls consisting of two wall elements, the clearance is provided at one side of the container or the lid, resulting in good stacking and storing properties, requiring no parts for fixing. In addition, it is easy to provide equal clearance to the one side of the container or the lid, and constant joint strength of the inner and outer containers or the top and bottom surface walls can be achieved.

In particular, in cases where the inner container is formed by means of multilayer molding, the outer container consisting of two wall elements, resulting in no clearance at the side of the inner container, the flat portions of the inner container do not expand when hot water is put inside the container.

### BRIEF EXPLANATION OF THE DRAWINGS

Fig. 1 is a partial section view showing a thermally insulated synthetic resin container and thermally insulated synthetic resin lid according to a first embodiment of the present invention.

Fig. 2 is a close-up partial section view showing the center of the bottom portion of the thermally insulated synthetic resin container of Fig. 1.

Fig. 3 is a close-up section view showing the side portion of the thermally insulated synthetic resin container of Fig. 1.

Fig. 4 is a partial section view showing an other embodiment of the inner container of the thermally insulated synthetic resin container of the present invention.

Fig. 5 is a close-up partial section view showing the side portion of the inner container of the thermally insulated synthetic resin container of Fig. 4.

Fig. 6 is a partial section view showing an other embodiment of the bottom surface wall of the thermally insulated synthetic resin lid of the present invention.

Fig. 7 is a close-up partial section view showing a part of the bottom surface wall of the thermally insulated synthetic resin lid of Fig. 6.

Fig. 8 is a partial section view showing a thermally insulated synthetic resin container and thermally insulated synthetic resin lid according to an other embodiment of the present invention.

Fig. 9 is a close-up section view showing the center of the bottom portion of the thermally insulated synthetic resin container of Fig. 8.

Fig. 10 is a close-up section view showing the side portion of the thermally insulated synthetic resin container of Fig. 8.

Fig. 11 is a partial section view showing an other embodiment of the outer container of the thermally insulated synthetic resin container of the present invention.

Fig. 12 is a close-up partial section view showing the side portion of the outer container of the thermally insulated synthetic resin container of Fig. 11.

Fig. 13 is a partial section view showing an other embodiment of the top surface wall of the thermally insulated synthetic resin lid of the present invention.

Fig. 14 is a close-up partial section view showing a part of the top surface wall of the thermally insulated synthetic resin lid of Fig. 13.

### PREFERRED EMBODIMENTS OF THE INVENTION

The thermally insulated synthetic resin container of the present invention comprises an inner container and an outer container, one of these containers being formed by multilayer molding, and the other container which is not multilayer molded being divided into an inner wall element and an outer wall element. Here, the multilayer molding may be conducted by two-color molding or by sandwich molding. In the case of two-color molding, it is preferable to form the layer in contact with a thermoinsulating layer by using a gas-barrier resin and the layer in contact with the external atmosphere by using a moisture resistant resin, and in the case of sandwich molding, it is preferable to form the intermediate layer by using a gas-barrier resin and the layers in contact with a thermoinsulating layer and the external atmosphere by using a moisture resistant resin, so that the gas-barrier resin is protected by the moisture resistant resins. Similarly, in the other container consisting of the inner wall element and the outer wall element, it is preferable to form the wall element in contact with a thermoinsulating layer by usign a gas-barrier resin and the other wall element in contact with the external atmosphere by using a moisture resistant resin, so that the gas-barrier resin is protected by the moisture resistant resin.

Similarly, the thermally insulated synthetic resin lid of the present invention comprises a top surface wall and a bottom surface wall, one of these walls being formed by multilayer molding, and the other wall which is not multilayer molded being divided into a top wall element and a bottom wall element. Here, the multilayer molding may be conducted by two-color molding or by sandwich molding. In the case of two-color -molding, it is preferable to form the layer in contact with a thermoinsulating layer by using a gas-barrier resin and the layer in contact with the external atmosphere by using a moisture resistant resin, and in the case of sandwich molding, it is preferable to form the intermediate layer by using a gas-barrier resin and the layers in contact with a thermoinsulating layer and the external atmosphere by using a moisture resistant resin, so that the gas-barrier resin is protected by the moisture resistant resin. Similarly, in the other wall consisting of the top wall element and the bottom wall element, it is preferable to form the wall element in contact with a thermoinsulating layer by using a gas-barrier resin and the other wall element in contact with the external atmosphere by using a moisture resistant resin, so that the gas-barrier resin is protected by the moisture resistant resin.

According to this invention, a gas-barrier resin means a synthetic resin material with excellent gas-barrier capabilities; concretely, one type chosen from among synthetic resin materials with gas permeabilities (ASTM D 1434-58) of no more than 1 g/m²/24 hr/atm with respect to O₂, N₂ and CO₂ is used. Such gas-barrier resins may be selected from among polyesters such as polyethyleneterephthalate, polybutyleneterephthalate, polyethylenenaphthalate; polyamid, ethelenevinyl alcohol, poly vinylidene chloride, polyacrylonitrile, and polyvinyl alcohol.

A moisture resistant resin means a synthetic resin material with high heat resistance, moisture resistance (moisture absorbency resistance), and high mechanical strength, concretely a synthetic resin material having a moisture absorbency of 50 g/m²/24 hr or less under conditions of a temperature of 40°C and relative humidity of 90% according to the standards of JIS Z 0208 and a bending elasticity (ASTM D 790) of at least 10,000 kg/cm² and/or an Izod impact strength (notched) (ASTM D 256) of at least 5 kg·cm/cm, chosen from among polypropylene resin, heat resistant and moisture resistant polycarbonate, ABS, polystyrene, AS, polyethylene, vinyl chloride, polyamide-imide and the like.

Hereinafter, the present invention will be explained in detail referring to the drawings.

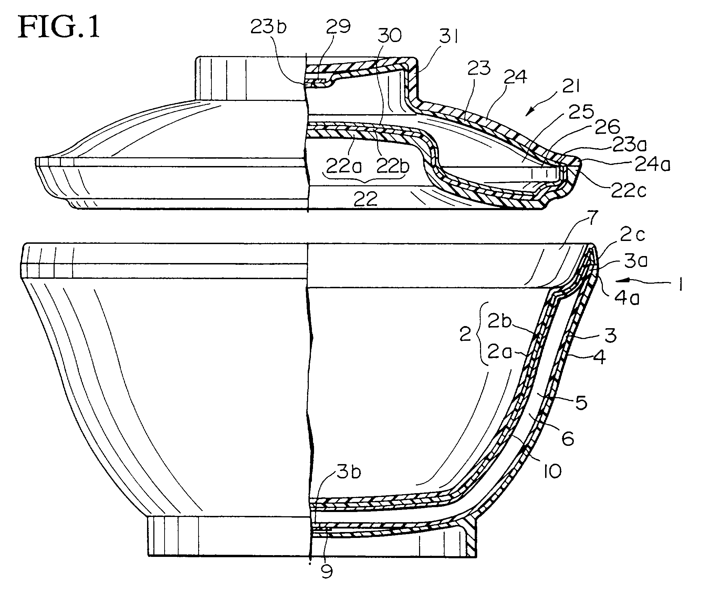

Fig. 1 shows a first embodiment of the thermally insulated synthetic resin container and thermally insulated synthetic resin lid of the present invention. In this embodiment, a thermally insulated synthetic resin lid 21 (hereinafter referred to simply as a lid 21) covers an opening 7 of a thermally insulated synthetic resin container 1 (hereinafter referred to simply as a container 1).

First, the container 1 will be explained. This container 1 comprises an inner container 2 which is formed by means of multilayer molding; an outer container consisting of an inner wall element 3 and an outer wall element 4 which are formed by means of injection molding so as to be arranged to conform with each other; and an aperture portion 3b being formed at the center of the bottom portion of the inner wall element 3 of the outer container. Furthermore, the end portion 2c of the inner container and the end portion 3a of the inner wall element of the outer container are joined together so that the inner container 2 is accommodated inside the inner wall element 3 of the outer container with a space layer 5 provided therebetween, and thereby the double-walled body having the space layer 5 as a thermoinsulating layer 6 is formed. In addition, the outer wall element 4 of the outer container and the inner container 2 are joined at their end portions 4a and 2c so that the obtained double-walled body is accommodated inside the outer wall element 4 of the outer container, and thereby the bowl-shaped container 1 is formed.

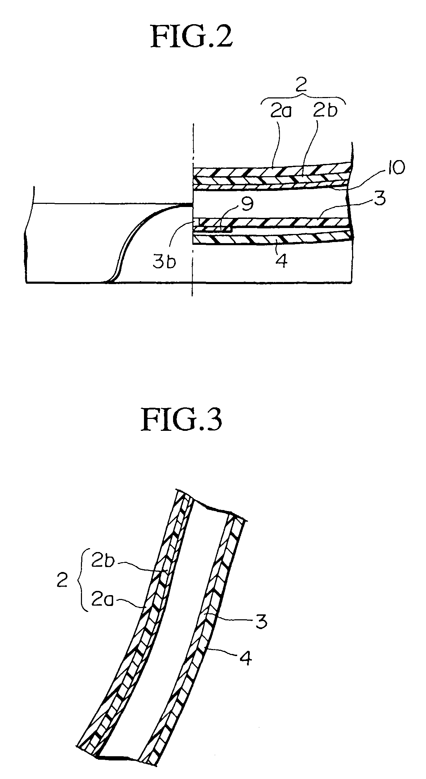

Fig. 2 shows a close-up partial section view of the center of the bottom portion of the insulating container of Fig. 1, and Fig. 3 shows a close-up section view of the side portion of the container of Fig. 1.

As shown in Figs. 1-3, the inner container 2 is two-color molded to form a bilayer consisting of an inner layer 2a and an outer layer 2b. The outer layer 2b of the inner container, as described above, is formed using a gas-barrier resin such as polyesters like polyethyleneterephthalate, polybutyleneterephthalate, and polyethylenenaphthalate; polyamid, ethelenevinyl alcohol, poly vinylidene chloride, polyacrylonitrile, polyvinyl alcohol, and the like. The inner layer 2a of the inner container is formed using a moisture resistant resin such as polypropylene, heat resistant and moisture resistant polycarbonate, ABS, polystyrene, AS, polyethylene, vinyl chloride, polyamide-imide and the like.

As a method for molding inner container 2 by means of two-color molding, a known two-color molding method (multi-color molding method) may be employed, such as, for example, the method disclosed in Plastic Molding Techniques, vol. 10, No. 11, pages 9 through 14 (1993), which uses a two-color/mixed color molding machine and working method.

By forming an inner container 2 by means of two-color molding using a gas-barrier resin and a moisture resistant resin, an inner container 2 which is provided with a high gas-barrier capacity can be formed without forming a metallic coating such as electroplating on the outer surface of the inner container 2. Moreover, the layer of the inner container 2 which is in contact with the external atmosphere demonstrates excellent mechanical strength, as well as resistance to moisture and heat. In addition, compared with an inner container consisting of two wall elements, the number of parts can be decreased, and the space for storage can be saved, as well as care for the inner containers can be easier.

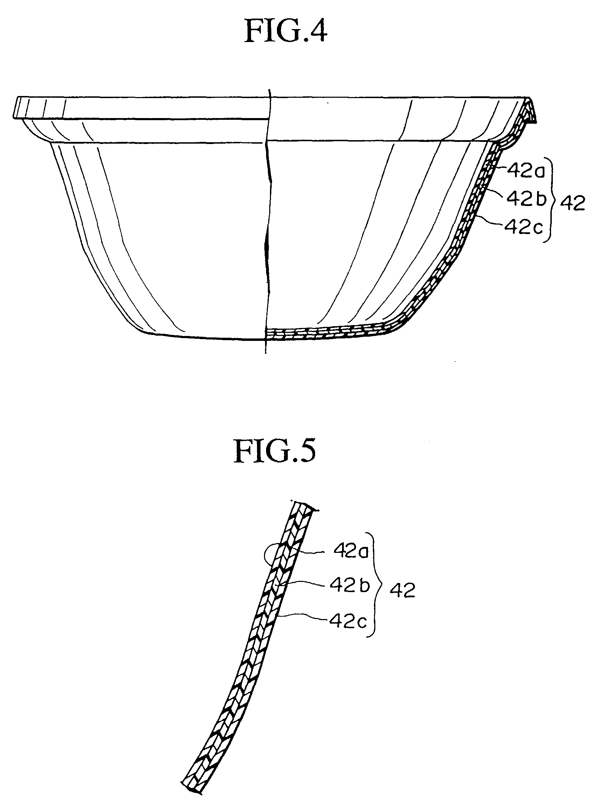

In place of the inner container 2 which is formed by means of two-color molding shown in Figs. 1-3, an inner container 42 in which an intermediate layer 42b of an inner container is sandwiched between an inner layer 42a and an outer layer 42c of an inner container can be employed as shown in Figs. 4 and 5.

An intermediate layer 42b of the inner container 42 is formed using a gas-barrier resin such as polyesters like polyethyleneterephthalate, polybutyleneterephthalate, and polyethylenenaphthalate; polyamid, ethelenevinyl alcohol, poly vinylidene chloride, polyacrylonitrile, polyvinyl alcohol, and the like.

The inner layer 42a and the outer layer 42c of the inner container are formed using a moisture resistant resin with high heat resistance, moisture resistance (rate of resistance to water-vapor transmission) and high mechanical strength, such as polypropylene, heat resistant and moisture resistant polycarbonate, ABS, polystyrene, AS, polyethylene, vinyl chloride, polyamide-imide and the like.

By forming inner container 42 by means of sandwich molding so that a gas-barrier resin is sandwiched between moisture resistant resins, the inner container 42 demonstrates a high gas-barrier capacity even if a metallic coating such as electroplating or the like is not formed on the outer surface of inner container 42. Further, the layer in contact with the external atmosphere of the inner container 42 has excellent mechanical strength as well as resistance to heat and moisture. As the outer surface of the inner container 42 is formed using a moisture resistant resin, it is possible to prevent a deterioration in performance due to absorption of moisture by the gas-barrier resin of the intermediate layer 42b of the inner container while the inner container 42 is stored. In addition, compared with an inner container consisting of two wall elements, the number of parts can be decreased, and the space for storage can be saved, as well as care for the inner containers can be easier.

A radiation shielding material 10 is disposed at the outer surface of the inner container 2 formed by means of two-color molding or the inner container 42 formed by means of sandwich molding. In addition, a radiation shielding material may be disposed at an inner surface of the inner wall element 3 of the outer container in the same way as the radiation shielding material 10. Aluminum foil, copper foil, or metalized tape are suitably employed as the radiation shielding material 10, as well as stainless foil, silver foil or paper which has metallic foil attached to both sides thereof.

The outer container consists of an inner wall element 3 and an outer wall element 4. The total thickness of the inner wall element 3 and the outer wall element 4 of the outer container is almost equivalent to the thickness of the inner container 2. Usually, the strength or the like considered, the thickness of the inner wall element 3 of the outer container is almost equal to the thickness of the outer wall element 4 of the outer container.

The inner wall element 3 of the outer container is formed using a gas-barrier resin in the same way as the outer layer of the inner container 2, and thereby an inner wall element 3 of an outer container demonstrates a high gas-barrier capacity even if a metallic coating such as electroplating or the like is not formed on the inner surface of the outer wall element 3.

The inner wall element 3 of the outer container and the inner container 2 are adjoined by means of welding methods such as vibration welding, spin welding and hot plate welding at their end portions 2c and 3a. Due to these welding methods, the double-walled body obtained by joining the inner container 2 and the inner wall element 3 of the outer container with a space layer provided therebetween has increased joint strength of the joint portions and airtight, so that when a low thermoconductive gas is filled in the space layer 5, the filled low thermoconductive gas does not leak from the joint portions.

In particular, when a gas-barrier resin is employed in the formation of the inner layer of the inner container 2 (or the intermediate layer of the inner container 42) and the inner wall element 3 of the outer container, a double-walled body having high gas barrier properties can be obtained.

As the low thermoconductive gas sealed within the space layer 5 of the above double-walled body, it is preferable to use at least one type of gas chosen from among xenon, krypton and argon. The thermal conductivities of the gases xenon (κ = 0.52 × 10⁻² W·m⁻¹·K⁻¹; 0 °C), krypton (κ = 0.87 × 10⁻² W·m⁻¹·K⁻¹; 0 °C) and argon (κ = 1.63 × 10⁻² W·m⁻¹·K⁻¹; 0 °C) are less than the thermal conductivity of air (κ = 2.41 × 10⁻² W·m⁻¹·K⁻¹; 0 °C), and these are used alone or as combined gases of two or more types to fill the space layer 5 at a filling pressure of approximately atmospheric pressure or less, i.e. 80-100 kPa, at room temperature. These gases are inert, and are suitable for protection of the environment. Additionally, if the filling pressure is within this range, the thermal insulation ability of the insulating layer 6 is improved and the pressure difference between the insulating layer 6 and the outside is small, so that the pressure difference with the outside will not cause depressions or bumps to form in the container 1. Consequently, the container 1 can be made into a variety of structures such as flat-walled structures.

By means of filling a low thermoconductive gas into the space layer 5, sufficient thermal insulation ability can be obtained even if the thickness of the space layer 5 is about 1-10 mm.

An aperture portion 3b for charging a low thermoconductive gas into the space layer 5 is formed at the bottom portion of the inner wall element of the outer container, and sealed off by means of a sealing plate 9 using a cyanoacrylate or acetonitrile adhesive from the outside of the inner wall element of the outer container (from the side of the outer wall element of the outer container). These adhesives are highly airtight after hardening and provide immediate powerful adhesion, so as to provide a reliable seal for the low thermoconductive gas filled in the space layer 5 after the double-walled body is sealed by the sealing plate 9. Furthermore, the sealing plate 9 is preferably formed by a gas-barrier resin similar to the inner wall element 3 of the outer container.

As described above, the aperture portion 3b is formed in the inner wall element 3 of the outer container and sealed off by the sealing plate 9 from its outside, and then its outside is covered by the outer wall element 4 of the outer container, so that the sealing portion is blocked off from the external environment. Therefore, the appearance is excellent and consideration of durability against the external atmosphere is not required. Furthermore, the aperture portion is preferably formed in the outer container rather than in the inner container, because the exchange of a gas can be performed more easily.

The outer wall element 4 of the outer container is formed using a moisture resistant resin similar to the inner layer 2a of the inner container. Thereby, the obtained container 1 demonstrates excellent mechanical strength, as well as resistance to moisture and heat.

The inner container 2 and the outer wall element 4 of the outer container are adjoined at their end portions 2c and 4a by means of welding methods such as vibration welding, spin welding and hot plate welding or by means of adhesives such as a cyanoacrylate or acetonitrile adhesive. These welding methods are preferable because the joint portions of the inner container 2 and the outer wall element of the outer container 4 have excellent joint strength.

In addition, a polypropylene resin is preferably used in order to form the inner container 2 and the outer wall element 4 of the outer container having improved mechanical strength, chemical resistance, and formability. When ABS resin which has excellent paint affinity is used, urethane painted products or lacquer-painted products can be produced.

The container of Fig. 1 may be produced by means of the following method.

First, the inner container 2 is formed by means of multilayer molding, and the inner wall element 3 and the outer wall element 4 of the outer container are formed by means of injection molding.

Next, the end portion 3a of the inner wall element 3 of the outer container and the end portion 2c of the inner container 2 are put together, fastened by a jig which supports almost the entire outer surface of the inner wall element 3 of the outer container and a jig which supports almost the entire inner surface of the inner container 2, and welded while these jigs are pressed equally, and thereby a double-walled body can be obtained. This method is preferably used because the deviation of axes between the inner container 2 and the inner wall element 3 of the outer container can be decreased.

Next, the air inside space layer 5 of the double-walled body is evacuated via the aperture portion 3b at the bottom portion of double-walled body and then filled with a low thermoconductive gas. This operation may be carried out by employing a device which can be switched between an evacuation system attached to an evacuation pump and a supply system for supplying a low thermoconductive gas, in which packing is disposed to the ends of the pipe. This packing is pushed against the aperture portion 3b, and space layer 5 is evacuated by the evacuation system while the aperture portion 3b is blocked off from the external atmosphere. Next, the device is switched over to the low thermoconductive gas supply system, and space layer 5 is filled with a low thermoconductive gas. Then, an adhesive such as a cyanoacrylate or acetonitrile adhesive is coated dropwise to the aperture portion 3b of the bottom portion of the inner wall element 3 of the outer container. Then, the aperture portion 3b is sealed by the sealing plate 9 which is formed of a gas-barrier resin. These adhesives are highly airtight after hardening and provide immediate powerful adhesion, so as to provide a reliable seal for the low thermal conductivity gas filled in the space layer 5.

Alternatively, when the inner wall element 3 of the outer container and the inner container 2 are welded inside the space between the jig which supports the inner wall element 3 of the outer container and the jig which supports the inner container 2, the space being filled with a low thermoconductive gas after being evacuated, the welding and the exchange of a gas can be conducted simultaneously, and the forming of the aperture portion is not necessary.

Next, the end portion 2c of the inner container 2 and the end portion 4a of the outer wall element 4 of the outer container are welded. Here, the clearance between the outer surface of the inner wall element 3 of the outer container and the inner surface of the outer wall element 4 of the outer container can be provided equally. Therefore, when the end portion 4a of the outer wall element 4 of the outer container and the end portion 2c of the inner container 2 is put together, fastened by a jig which supports almost the entire outer surface of the outer wall element 4 of the outer container and by a jig which supports almost the entire inner surface of the inner container 2, and then welded while these jigs are pressed equally, the constant welding strength of the end portion 2c of the inner container and the end portion 4a of the outer wall element of the outer container can be achieved, and thereby the welding strength of the obtained products can be constant.

Next, the lid 21 will be explained by Fig 1. This lid covers the opening 7 of the container 1. This lid 21 has a handle 31 which protrudes upwards from the upper surface of the lid.

This lid 21 comprises a bottom surface wall 22 which is formed by means of multilayer molding; a bottom wall element 23 of a top surface wall and a top wall element 24 of a top surface wall which are formed by means of injection molding so as to be arranged to conform with each other; and an aperture portion 23b being formed at the center of the upper portion of the bottom wall element 23 of the top surface wall. Furthermore, the bottom surface wall 22 and the bottom wall element 23 of the top surface wall are joined together with a space layer 25 provided therebetween, and thereby the double-walled body for a lid having the space layer 25 as a thermoinsulating layer 26 is formed. Then, the top wall element 24 of the top surface wall, which covers the upper surface of the top wall element 24 of the top surface wall, and the bottom surface wall 22 are joined at their end portions 24a and 22c, and thereby the hat-shaped lid 21 is formed.

The bottom surface wall 22 shown in Fig 1 is two-color molded to form a bilayer consisting of a lower layer 22a and an upper layer 22b. The upper layer 22b of the bottom surface wall, as described above, is formed using a gas-barrier resin such as polyesters like polyethyleneterephthalate, polybutyleneterephthalate, and polyethylenenaphthalate; polyamid, ethelenevinyl alcohol, poly vinylidene chloride, polyacrylonitrile, polyvinyl alcohol, and the like. The lower layer 22a of the bottom surface wall is formed using a moisture resistant resin such as polypropylene, heat resistant and moisture resistant polycarbonate, ABS, polystyrene, AS, polyethylene, vinyl chloride, polyamide-imide and the like.

As a method for molding the bottom surface wall by means of two-color molding, a known two-color molding method (multi-color molding method) may be employed.

By forming a bottom surface wall 22 by means of two-color molding using a gas-barrier resin and a moisture resistant resin, a bottom surface wall 22 which is provided with a high gas-barrier capacity can be formed without forming a metallic coating such as electroplating on the upper surface of the bottom surface wall 22. Moreover, the layer of the bottom surface wall 22 which is in contact with the external atmosphere demonstrates excellent mechanical strength, as well as resistance to moisture and heat. In addition, compared with a bottom surface wall consisting of two wall elements, the number of parts can be decreased, and the space for storage can be saved, as well as care for the bottom surface walls can be easier.

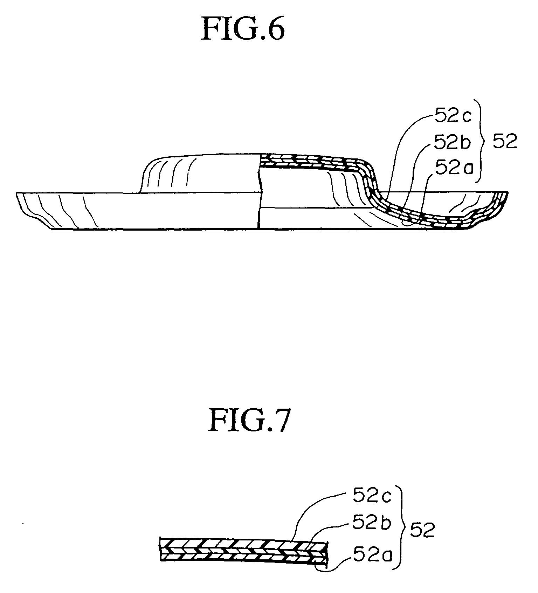

In place of the bottom surface wall 22 which is formed by means of two-color molding shown in Fig. 1, an bottom surface wall 52 in which an intermediate layer 52b of a bottom surface wall is sandwiched between a lower layer 52a and an upper layer 52c of a bottom surface wall can be employed as shown in Figs. 6 and 7.

An intermediate layer 52b of the bottom surface wall 52 is formed using a gas-barrier resin such as polyesters like polyethyleneterephthalate, polybutyleneterephthalate, and polyethylenenaphthalate; polyamid, ethelenevinyl alcohol, poly vinylidene chloride, polyacrylonitrile, polyvinyl alcohol, and the like.

The lower layer 52a and the upper layer 52c of the bottom surface wall are formed using a moisture resistant resin with high heat resistance, moisture resistance (rate of resistance to water-vapor transmission) and high mechanical strength, such as polypropylene, heat resistant and moisture resistant polycarbonate, ABS, polystyrene, AS, polyethylene, vinyl chloride, polyamide-imide and the like.

By forming the bottom surface wall 52 by means of sandwich molding so that a gas-barrier resin is sandwiched between moisture resistant resins, a bottom surface wall 52 demonstrates a high gas-barrier capacity even if a metallic coating such as electroplating or the like is not formed on the outer surface of bottom surface wall 52. Further, the layer in contact with the external atmosphere in the bottom surface wall 52 has excellent mechanical strength as well as resistance to heat and moisture. As the upper surface of the bottom surface wall 52 is formed using a moisture resistant resin, it is possible to prevent a deterioration in performance due to absorption of moisture by the gas-barrier resin of the intermediate layer 52b of the bottom surface wall while the bottom surface wall is stored. In addition, as the bottom surface wall is formed integrally by sandwich molding, compared with a bottom surface wall consisting of two wall elements, the number of parts can be decreased, and the space for storage can be saved, as well as care for the bottom surface walls can be easier.

A radiation shielding material 30 is disposed at the upper surface of the bottom surface wall 22 formed by means of two-color molding or the bottom surface wall 52 formed by means of sandwich molding. In addition, a radiation shielding material may be disposed at a lower surface of the bottom wall element 2 of the top surface wall in the same way as the radiation shielding material 30. Aluminum foil, copper foil, or metalized tape are suitably employed as the radiation shielding material 30, as well as stainless foil, silver foil or paper which has metallic foil attached to both sides thereof.

The top surface wall consists of a bottom wall element 23 and a top wall element 24. The total thickness of the bottom wall element 23 and the top wall element 24 of the top surface wall is almost equivalent to the thickness of the bottom surface wall 22. Usually, the strength or the like considered, the thickness of the bottom wall element 32 of the top surface wall is almost equal to the thickness of the top wall element 24 of the top surface wall.

The bottom wall element 23 of the top surface wall is formed using a gas-barrier resin in the same way as the upper layer 22b of the bottom surface wall 22, and thereby a bottom wall element 23 of a top surface wall demonstrates a high gas-barrier capacity even if a metallic coating such as electroplating or the like is not formed on the lower surface of the bottom wall element 23 of the top surface wall.

The bottom wall element 23 of the top surface wall and the bottom surface wall 22 are adjoined by means of welding methods such as vibration welding, spin welding and hot plate welding at their end portions 22c and 23a. Due to these welding methods, the double-walled body for a lid obtained by joining the bottom surface wall 22 and the bottom wall element 23 of the top surface wall with a space layer provided therebetween has increased joint strength of the joint portions and airtight, so that when a low thermoconductive gas is filled in the space layer 25, the filled low thermoconductive gas does not leak from the joint portions.

In particular, when a gas-barrier resin is employed in the formation of the upper layer 22b of the bottom surface wall (or the intermediate layer of the bottom surface wall) and the bottom wall element 23 of the top surface wall, a double-walled body for a lid having high gas barrier properties can be obtained.

As the low thermoconductive gas sealed within the space layer 25 of the above double-walled body for a lid, it is preferable to use at least one type of gas chosen from among xenon, krypton and argon. These gases are used alone or as combined gases of two or more types to fill the space layer 25 at a filling pressure of approximately atmospheric pressure or less, i.e. 80-100 kPa, at room temperature.

By means of filling a low thermoconductive gas into the apace layer 25, sufficient thermal insulation ability can be obtained even if the thickness of the space layer 25, excepting the handle 31 (the protruding portion of the handle 31) is about 5-10 mm.

An aperture portion 23b for charging a low thermoconductive gas into the space layer 25 is formed at the bottom portion of the bottom wall element 23 of the top surface wall, and sealed off by means of a sealing plate 29 using a cyanoacrylate or acetonitrile adhesive from the upside of the bottom wall element of the top surface wall. These adhesives are highly airtight after hardening and provide immediate powerful adhesion, so as to provide a reliable seal for the low thermoconductive gas filled in the space layer 25. Furthermore, the sealing plate 29 is preferably formed by a gas-barrier resin similar to the bottom wall element 23 of the top surface wall.

As described above, the aperture portion 23b is formed in the bottom wall element 23 of the top surface wall and sealed off by the sealing plate 29 from its outside, and then its outside is covered by the top wall element 24 of the top surface wall, so that the sealing portion is blocked off from the external environment. Therefore, the appearance is excellent and consideration of durability against the external atmosphere is not required. Furthermore, the aperture portion is preferably formed in the top surface wall, because the exchange of a gas can be performed more easily.

The top wall element 24 of the top surface wall is formed using a moisture resistant resin as described above. Thereby, the container 1 demonstrates excellent mechanical strength, as well as resistance to moisture and heat.

The bottom surface wall 22 and the top wall element 24 of the top surface wall are adjoined at their end portions 22c and 24a by means of welding methods such as vibration welding, spin welding and hot plate welding or by means of adhesives such as a cyanoacrylate or acetonitrile adhesive. These welding methods are preferable because the joint portions of the bottom surface wall 22 and the top surface wall element 24 of the top surface wall have excellent joint strength.

In addition, a polypropylene resin is preferably used in order to form the bottom surface wall 22 and the top wall element 24 of the top surface wall having improved mechanical strength, chemical resistance, and formability. When ABS resin which has excellent paint affinity is used, urethane painted products or lacquer-painted products can be produced.

The lid of Fig. 1 may be produced by means of the following method.

First, the bottom surface wall 22 is formed by means of multilayer molding, and the lower wall element 23 and the top wall element 24 of the top surface wall are formed by means of injection molding.

Next, the end portion 23a of the bottom wall element 23 of the top surface wall and the end portion 22c of the bottom surface wall 22 are put together, fastened by a jig which supports almost the entire upper surface of the bottom wall element 23 of the top surface wall and by a jig which supports almost the entire lower surface of the bottom surface wall 22, and welded while these jigs are pressed equally, and thereby a double-walled body for a lid can be obtained. This method is preferably used because the deviation of axes between the bottom surface wall 22 and the bottom wall element 23 of the top surface wall can be decreased.

Next, the air inside space layer 25 of the double-walled body for a lid is evacuated via the aperture portion 23b at the bottom portion of double-walled body for a lid and then filled with a low thermoconductive gas. This operation may be carried out by employing a device which can be switched between an evacuation system attached to an evacuation pump and a supply system for supplying a low thermoconductive gas, in which packing is disposed to the ends of the pipe. This packing is pushed against the aperture portion 23b, and space layer 25 is evacuated by the evacuation system while the aperture portion 23b is blocked off from the external atmosphere. Next, the device is switched over to the low thermoconductive gas supply system, and space layer 25 is filled with a low thermoconductive gas.

Then, an adhesive such as a cyanoacrylate or acetonitrile adhesive is coated dropwise to the aperture portion 23b and the aperture portion 23b is sealed by the sealing plate 29 which is formed a gas-barrier resin. These adhesives are highly airtight after hardening and provide immediate powerful adhesion, so as to provide a reliable seal for the low thermal conductivity gas filled in the space layer 25.

Alternatively, when the bottom wall element 23 of the top surface wall and the bottom surface wall 22 are welded inside the space between the jig which supports the bottom wall element 23 of the top surface wall and the jig which supports the bottom surface wall 22, the space being filled with a low thermoconductive gas after being evacuated, the welding and the exchange of a gas can be conducted simultaneously, and the forming of the aperture portion is not necessary.

Next, the end portion 22c of the bottom surface wall 22 and the end portion 24a of the top wall element 24 of the top surface wall are welded. Here, the clearance between the upper surface of the bottom wall element 23 of the top surface wall and the lower surface of the top wall element 24 of the top surface wall can be provided equally. Therefore, when the end portion 24a of the top wall element 24 of the top surface wall and the end portion 22c of the bottom surface wall 22 is put together, fastened by a jig which supports almost the entire upper surface of the top wall element 24 of the top surface wall and by a jig which supports almost the entire lower surface of the bottom surface wall 22, and then welded while the jigs are pressed equally, the constant welding strength of the end portion 22c of the bottom surface wall and the end portion 24a of the top wall element of the top surface wall can be achieved and thereby the welding strength of the obtained products can be constant.

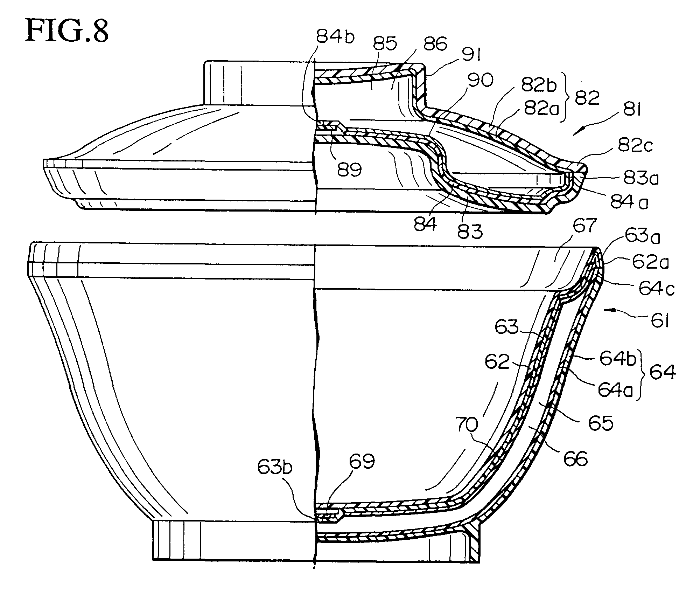

Figs. 8-10 show a second embodiment of the thermally insulated synthetic resin container and thermally insulated synthetic resin lid of the present invention. In this embodiment, a thermally insulated synthetic resin container 61 (hereinafter referred to simply as a container 62) comprises an outer container 64 which is formed by means of two-color molding to form an inner layer and an outer layer; an inner container consisting of an inner wall element 62 and an outer wall element 63 which are formed by means of injection molding so as to be arranged to conform with each other; and an aperture portion 63b being formed at the center of the bottom portion of the outer wall element 63 of the inner container. A thermally insulated synthetic resin lid 81 (hereinafter referred to simply as a lid 81), which covers an opening 62a of the container 61, comprises a top surface wall 82 which is formed by means of two-color molding to form an upper layer and a lower layer; a bottom surface wall consisting of a bottom wall element 83 and a top wall element 84 which are formed by means of injection molding so as to be arranged to conform with each other; and an aperture portion 84b being formed at the center of the upper portion of the top wall element 84 of the bottom surface wall.

First, the container 61 will be explained. This container 61 comprises an outer container 64 which is formed by means of two-color molding to form a bilayer consisting of an inner layer 64a of the outer container and an outer layer 64b of the outer container, and an inner wall element 62 and an outer wall element 63 of the inner container, which are formed by means of injection molding as two wall elements consisting an inner container 63. Furthermore, the end portion 64c of the outer container and the end portion 63a of the outer wall element of the inner container are joined together so that the outer wall element 63 of the inner container is accommodated inside the outer container 64 with a space layer 65 provided therebetween, and thereby the double-walled body having the space layer 65 as a thermoinsulating layer 66 is formed. Then, the inner wall element 62 of the inner container, which covers the inside of the outer wall element 63 of the inner container, and the outer container 64 are joined at their end portions 62a and 64c, and thereby the bowl-shaped container is formed.

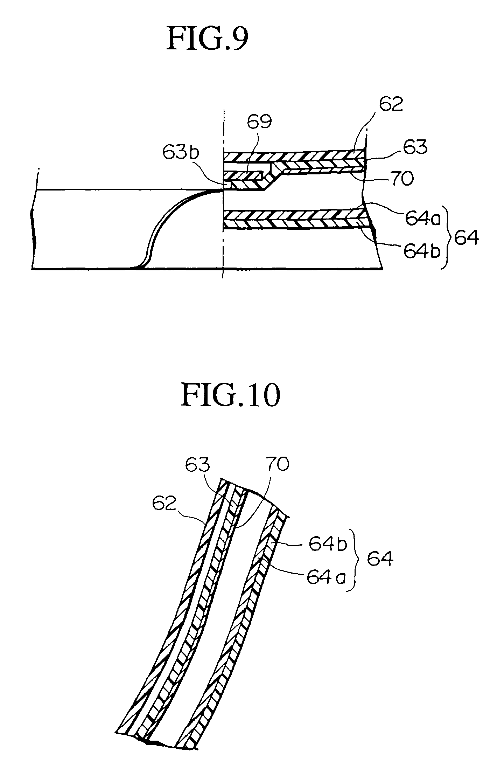

Fig. 9 shows a close-up partial section view of the center of the bottom portion of the container 61 of Fig. 8, and Fig. 10 shows a close-up section view of the side portion of the container of Fig. 8.

As shown in Figs. 8-10, the outer container 64 is two-color molded to form a bilayer consisting of an inner layer and an outer layer. The inner layer 64a of the outer container is formed using a gas-barrier resin such as polyesters like polyethyleneterephthalate, polybutyleneterephthalate, and polyethylenenaphthalate; polyamid, ethelenevinyl alcohol, poly vinylidene chloride, polyacrylonitrile, polyvinyl alcohol, and the like.

The outer layer 64b of the outer container is formed using a moisture resistant resin such as polypropylene, heat resistant and moisture resistant polycarbonate, ABS, polystyrene, AS, polyethylene, vinyl chloride, polyamide-imide and the like.

As a method for molding the outer container 64 using two-color molding, a known two-color molding method (multi-color molding method) may be employed.

By forming an outer container 64 by means of two-color molding using a gas-barrier resin and a moisture resistant resin, an outer container 64 which is provided with a high gas-barrier capacity can be formed without forming a metallic coating such as electroplating on the inner surface of the outer container 64. Moreover, the layer of the outer container 64 which is in contact with the external atmosphere demonstrates excellent mechanical strength, as well as resistance to moisture and heat. In addition, as the outer container is formed by means of two-color molding, compared with an outer container consisting of two wall elements, the number of parts can be decreased, and the space for storage can be saved, as well as care for the outer containers can be easier.

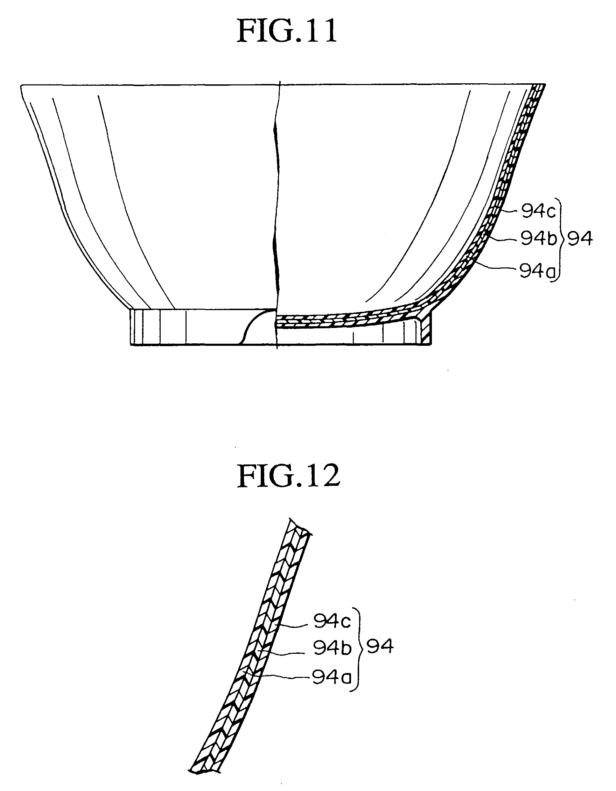

In place of the outer container 64 of Fig. 8, which is formed by means of two-color molding, an outer container 94 in which an intermediate layer 94b of an outer container is sandwiched between an inner layer 94a and an outer layer 94c of an outer container can be employed as shown in Figs. 11 and 12.

An intermediate layer 94b of the outer container 94 is formed using a gas-barrier resin such as polyesters like polyethyleneterephthalate, polybutyleneterephthalate, and polyethylenenaphthalate; polyamid, ethelenevinyl alcohol, poly vinylidene chloride, polyacrylonitrile, polyvinyl alcohol, and the like.

The inner layer 94a and the outer layer 94c of the outer container are formed using a moisture resistant resin with high heat resistance, moisture resistance (rate of resistance to water-vapor transmission) and high mechanical strength, such as polypropylene, heat resistant and moisture resistant polycarbonate, ABS, polystyrene, AS, polyethylene, vinyl chloride, polyamide-imide and the like.

By forming the outer container 94 by means of sandwich molding so that a gas-barrier resin is sandwiched between moisture resistant resins, the outer container 94 demonstrates a high gas-barrier capacity even if a metallic coating such as electroplating or the like is not formed on the inner surface of outer container 94. Further, the layer in contact with the external atmosphere of the outer container 94 has excellent mechanical strength as well as resistance to heat and moisture. As the inner surface of the outer container 94 is formed using a moisture resistant resin, it is possible to prevent a deterioration in performance due to absorption of moisture by the gas-barrier resin of the intermediate layer 94b of the outer container while the outer container 94 is stored. In addition, as the outer container 94 is formed by means of the sandwich molding, compared with an outer container consisting of two wall elements, the number of parts can be decreased, and the space for storage can be saved, as well as care for the outer containers can be easier.

The total thickness of the inner wall element 62 and the outer wall element 63 of the inner container is almost equivalent to the thickness of the outer container 64. Usually, the strength or the like considered, the thickness of the inner wall element 62 of the inner container is almost equal to the thickness of the outer wall element 63 of the inner container. Further, when the outer container 64 and the outer wall element 63 of the inner container are joined, and then the outer container 64 and the inner wall element 62 of the inner container are joined, the inner surface of the outer container 64 and the outer surface of the outer wall element 63 of the inner container are formed so as to be able to be welded at their end portions. Likewise, the outer surface of the outer container 64 and the inner surface of the inner wall element 62 of the inner container are formed so as to be able to be welded at their end portions.

The outer wall element 63 of the inner container is formed using a gas-barrier resin in the same way as the inner layer of the outer container 64, and thereby an outer wall element 63 of an inner container demonstrates a high gas-barrier capacity even if a metallic coating such as electroplating or the like is not formed on the outer surface of the outer wall element 63 of the inner container.

A radiation shielding material 70 is disposed at the outer surface of the outer wall element 63 of the inner container. In addition, a radiation shielding material may be disposed at the inner surface of the outer container 64 formed by means of two-color molding or at the inner surface of the outer container 94 formed by means of sandwich molding in the same way as the radiation shielding material 70.

The outer wall element 63 of the inner container and the outer container 64 are adjoined by means of welding methods such as vibration welding, spin welding and hot plate welding at their end portions 64c and 63a. As the low thermoconductive gas sealed within the space layer 65 of the above double-walled body, it is preferable to use at least one type of gas chosen from among xenon, krypton and argon. These are used alone or as combined gases of two or more types to fill the space layer 65 at a filling pressure of approximately atmospheric pressure or less, i.e. 80-100 kPa, at room temperature.

By means of filling a low thermoconductive gas into the space layer 65, sufficient thermal insulation ability can be obtained even if the thickness of the space layer 65 is about 1-10 mm.

An aperture portion 63b for charging a low thermoconductive gas into the space layer 65 is formed at the bottom portion of the outer wall element 63 of the inner container, and sealed off by means of a sealing plate 69 using a cyanoacrylate or acetonitrile adhesive from the inside of the outer wall element of the inner container (from the side of the inner wall element of the inner container). These adhesives are highly airtight after hardening and provide immediate powerful adhesion, so as to provide a reliable seal for the low thermoconductive gas filled in the space layer 65 after the double-walled body is sealed by the sealing plate 69. Furthermore, the sealing plate 69 is preferably formed by a gas-barrier resin similar to the outer wall element 63 of the inner container.

As described above, the aperture portion 63b is formed in the outer wall element 63 of the inner container and sealed off by the sealing plate 69 from its inside, and then its inside is covered by the inner wall element 62 of the inner container, so that the sealing portion is blocked off from the external environment. Therefore, the appearance is excellent and consideration of durability against the external atmosphere is not required.

The inner wall element 62 of the inner container is formed using a moisture resistant resin similar to the outer layer of the outer container 64. Thereby, when the container is formed by joining the end portion 64c of the outer container of the double-walled body and the end portion 62a of the inner wall element 62 of the inner container, the obtained container 61 demonstrates excellent mechanical strength, as well as resistance to moisture and heat.

The outer container 64 and the inner wall element 62 of the inner container are adjoined at their end portions 64c and 62a by means of welding methods such as vibration welding, spin welding and hot plate welding or by means of adhesives such as a cyanoacrylate or acetonitrile adhesive. These welding methods are preferable because the joint portions of the outer container 64 and the inner wall element 62 of the inner container have excellent joint strength.

In addition, a polypropylene resin is preferably used in order to form the outer container 64 and the inner wall element 62 of the inner container having improved mechanical strength, chemical resistance, and formability. When ABS resin which has excellent paint affinity is used, urethane painted products or lacquer-painted products can be produced.

The container of Fig. 8 may be produced by means of the following method.

First, the outer container is formed by means of multilayer molding, and the inner wall element and the outer wall element of the inner container are formed by means of injection molding.

Next, the end portion 63a of the outer wall element 63 of the inner container and the end portion 64c of the outer container 64 are put together, fastened by a jig which supports almost the entire inner surface of the outer wall element 63 of the inner container and by a jig which supports almost the entire outer surface of the outer container 64, and welded while these jigs are pressed equally, and thereby a double-walled body can be obtained. This method is preferably used because the deviation of axes between the outer container 64 and the outer wall element 63 of the inner container can be decreased.

Next, the air inside space layer 65 of the double-walled body is evacuated via the aperture portion 63b at the bottom portion of double-walled body and then filled with a low thermoconductive gas. This operation may be carried out by employing a device which can be switched between an evacuation system attached to an evacuation pump and a supply system for supplying a low thermoconductive gas, in which packing is disposed to the ends of the pipe. This packing is pushed against the aperture portion 63b, and space layer 65 is evacuated by the evacuation system while the aperture portion 63b is blocked off from the external atmosphere. Next, the device is switched over to the low thermoconductive gas supply system, and space layer 65 is filled with a low thermoconductive gas.

Then, an adhesive such as a cyanoacrylate or acetonitrile adhesive is coated dropwise to the aperture portion 63b of the bottom portion of the outer wall element 63 of the inner container. Then, the aperture portion 63b is sealed by the sealing plate 69 which is formed of a gas-barrier resin. These adhesives are highly airtight after hardening and provide immediate powerful adhesion, so as to provide a reliable seal for the low thermal conductivity gas filled in the space layer 65.

Alternatively, when the outer wall element of the inner container and the outer container are welded inside the space between the jig which supports the outer wall element of the inner container and the jig which supports the outer container, the space being filled with a low thermoconductive gas after being evacuated, the welding and the exchange of a gas can be conducted simultaneously, and the forming of the aperture portion is not necessary.

Next, the end portion 64c of the outer container 64 and the end portion 63a of the outer wall element 63 of the inner container are welded. Here, the clearance between the inner surface of the outer wall element 63 of the inner container and the outer surface of the inner wall element 62 of the inner container can be provided equally. Therefore, when the end portion 62a of the inner wall element 62 of the inner container and the end portion 64c of the outer container 64 is put together, fastened by a jig which supports almost the entire inner surface of the inner wall element 62 of the inner container and by a jig which supports almost the entire outer surface of the outer container 64, and then welded while these jigs are pressed equally, the constant welding strength of the end portion 64c of the outer container and the end portion 62a of the inner wall element of the outer container can be set achieved, and thereby the welding strength of the obtained products can be constant.

Next, the lid 81 will be explained by Fig 8. This lid 81 covers the opening 67 of the container 61. This lid 81 has a handle 91 which protrudes upwards from the upper surface of the lid.

This lid 81 comprises a top surface wall 82 which is formed by means of multilayer molding; a bottom wall element 83 of a bottom surface wall and a top wall element 84 of a bottom surface wall which are formed by means of injection molding; and an aperture portion 84b being formed at the center of the top wall element 84 of the bottom surface wall. Furthermore, the top surface wall 82 and the top wall element 84 of the bottom surface wall are joined together at the end portion 82c of the top surface wall and the end portion 84a of the top wall element of the bottom surface wall with a space layer 85 provided therebetween, and thereby the double-walled body for a lid having the space layer 85 as a thermoinsulating layer 86 is formed. Then, the bottom wall element 83 of the bottom surface wall, which covers the lower surface of the top wall element 84 of the bottom surface wall, and the top surface wall 82 are joined at their end portions 83a and 82c, and thereby the hat-shaped lid 81 is formed.

The top surface wall 82 shown in Fig 8 is two-color molded to form a bilayer consisting of a lower layer 82a and an upper layer 82b. The lower layer 82a of the top surface wall, as described above, is formed using a gas-barrier resin such as polyesters like polyethyleneterephthalate, polybutyleneterephthalate, and polyethylenenaphthalate; polyamid, ethelenevinyl alcohol, poly vinylidene chloride, polyacrylonitrile, polyvinyl alcohol, and the like. The upper layer 82b of the top surface wall is formed using a moisture resistant resin such as polypropylene, heat resistant and moisture resistant polycarbonate, ABS, polystyrene, AS, polyethylene, vinyl chloride, polyamide-imide and the like.

As a method for molding the top surface wall by means of two-color molding, a known two-color molding method (multi-color molding method) may be employed.

By forming a top surface wall 82 by means of two-color molding using a gas-barrier resin and a moisture resistant resin, a top surface wall 82 which is provided with a high gas-barrier capacity can be formed without forming a metallic coating such as electroplating on the lower surface of the top surface wall 82. Moreover, the layer of the top surface wall 82 which is in contact with the external atmosphere demonstrates excellent mechanical strength, as well as resistance to moisture and heat. In addition, compared with a top surface wall consisting of two wall elements, the number of parts can be decreased, and the space for storage can be saved, as well as care for the top surface walls can be easier.

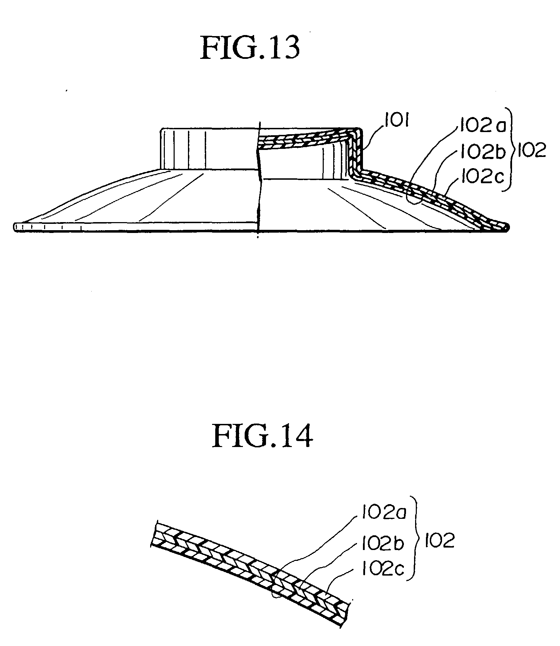

In place of the top surface wall 82 which is formed by means of two-color molding, an top surface wall 102 in which an intermediate layer 102b of a top surface wall is sandwiched between a lower layer 102a and an upper layer 102c of a top surface wall can be employed as shown in Figs. 13 and 14.

An intermediate layer 102b of the top surface wall 102 is formed using a gas-barrier resin such as polyesters like polyethyleneterephthalate, polybutyleneterephthalate, and polyethylenenaphthalate; polyamid, ethelenevinyl alcohol, poly vinylidene chloride, polyacrylonitrile, polyvinyl alcohol, and the like.

The lower layer 102a and the upper layer 102c of the top surface wall are formed using a moisture resistant resin with high heat resistance, moisture resistance (rate of resistance to water-vapor transmission) and high mechanical strength, such as polypropylene, heat resistant and moisture resistant polycarbonate, ABS, polystyrene, AS, polyethylene, vinyl chloride, polyamide-imide and the like.

By forming the top surface wall 102 by means of sandwich molding so that a gas-barrier resin is sandwiched between moisture resistant resins, a top surface wall 102 demonstrates a high gas-barrier capacity even if a metallic coating such as electroplating or the like is not formed on the inner surface of the top surface wall 102. Further, the layer in contact with the external atmosphere of the top surface wall 102 has excellent mechanical strength as well as resistance to heat and moisture. As the lower surface of the top surface wall 102 is formed of a moisture resistant resin, it is possible to prevent a deterioration in performance due to absorption of moisture by the gas-barrier resin of the intermediate layer 102b of the top surface wall while the top surface wall 102 is stored. In addition, as the top surface wall is formed integrally by sandwich molding, compared with an top surface wall consisting of two wall elements, the number of parts can be decreased, and the space for storage can be saved, as well as care for the top surface walls can be easier.

The bottom surface wall consists of a bottom wall element 83 and a top wall element 84. The total thickness of the bottom wall element 83 and the top wall element 84 of the bottom surface wall is almost equivalent to the thickness of the top surface wall 82. Usually, the strength or the like considered, the thickness of the bottom wall element 83 of the bottom surface wall is almost equal to the thickness of the top wall element 84 of the bottom surface wall.

The top wall element 84 of the bottom surface wall is formed using a gas-barrier resin in the same way as the lower layer of the top surface wall 82; thereby, a top wall element 84 of a bottom surface wall demonstrates a high gas-barrier capacity even if a metallic coating such as electroplating or the like is not formed on the upper surface of the top wall element 84 of the bottom surface wall; and a double-walled body for a lid having high gas barrier properties can be obtained by joining the top surface wall 82 and the top wall element 84 of the bottom surface wall at their end portions 82c, 84a by means of the above welding method.

The bottom wall element 83 of the bottom surface wall is formed using a moisture resistant resin as described above. Thereby, the atmosphere side of the obtained lid 81 demonstrates excellent mechanical strength, as well as resistance to moisture and heat when the end portion 82c of the top wall element of the double-walled body for a lid and the end portion 83a of the bottom wall element 83 of the bottom surface wall which covers the inner surface (lower surface) of the top wall element 84 of the bottom surface wall of the double-walled body for a lid.

A radiation shielding material 90 is disposed at the upper surface of the top wall element 84 of the bottom surface wall. In addition, a radiation shielding material 90 may be disposed at the lower surface of the top surface wall 82 formed by means of two-color molding or at the lower surface of the top surface wall 102 formed by means of sandwich molding.

The top wall element 84 of the bottom surface wall and the top surface wall 82 are adjoined by means of welding methods such as vibration welding, spin welding and hot plate welding at their end portions 82c and 84a. Due to these welding methods, the double-walled body for a lid obtained by joining the top surface wall 82 and the top wall element 84 of the bottom surface wall with a space layer 85 provided therebetween has increased joint strength of the joint portions and airtight, so that when a low thermoconductive gas is filled in the space layer 85, the filled low thermoconductive gas does not leak from the joint portions.

In particular, when a gas-barrier resin is employed in the formation of the lower layer 82a of the top surface wall 82 (or the intermediate layer of the top surface wall 102) and the top wall element 84 of the bottom surface wall, a double-walled body for a lid having high gas barrier properties can be obtained.

As the low thermoconductive gas sealed within the space layer 85 of the above double-walled body for a lid, it is preferable to use at least one type of gas chosen from among xenon, krypton and argon. These gases are used alone or as combined gases of two or more types to fill the space layer 85 at a filling pressure of approximately atmospheric pressure or less, i.e. 80-100 kPa, at room temperature.

By means of filling a low thermoconductive gas into the space layer 85, sufficient thermal insulation ability can be obtained even if the thickness of the space layer 85, excepting the handle 91 or 101 (the protruding portion of the handle 91 or 101) is about 5-10 mm.

An aperture portion 84b for charging a low thermoconductive gas into the space layer 85 is formed at the center of the top wall element 84 of the bottom surface wall, and sealed off by means of a sealing plate 89 using a cyanoacrylate or acetonitrile adhesive from the lower side of the top wall element of the bottom surface wall. These adhesives are highly airtight after hardening and provide immediate powerful adhesion, so as to provide a reliable seal for the low thermoconductive gas filled in the space layer 85. Furthermore, the sealing plate 89 is preferably formed by a gas-barrier resin similar to the top wall element 84 of the bottom surface wall.

As described above, the aperture portion 84b is formed in the top wall element 84 of the bottom surface wall and sealed off by the sealing plate 9 from its lower side, and then its lower side is covered by the bottom wall element 83 of the bottom surface wall, so that the sealing portion is blocked off from the external environment. Therefore, the appearance is excellent and consideration of durability against the external atmosphere is not required.

The bottom wall element 83 of the bottom surface wall is formed of a moisture resistant resin as described above. Thereby, the lid 81 demonstrates excellent mechanical strength, as well as resistance to moisture and heat.

The top surface wall 82 and the bottom wall element 83 of the bottom surface wall are adjoined at their end portions 82c and 84a by means of welding methods such as vibration welding, spin welding and hot plate welding or by means of adhesives such as a cyanoacrylate or acetonitrile adhesive. These welding methods are preferable because the joint portions have excellent joint strength.

In addition, a polypropylene resin is preferably used in order to form the bottom surface wall 82 and the bottom wall element 84 of the bottom surface wall having improved mechanical strength, chemical resistance, and formability. When ABS resin which has excellent paint affinity is used, urethane painted products or lacquer-painted products can be produced.

The lid of Fig. 8 may be produced by means of the following method.

First, the top surface wall 82 is formed by means of multilayer molding, and the lower wall element 83 of the top surface wall and the top wall element 84 of the bottom surface wall are formed by means of injection molding.

Next, the end portion 84a of the top wall element 84 of the bottom surface wall and the end portion 82c of the top surface wall 82 are put together, fastened by a jig which supports almost the entire lower surface of the top wall element 84 of the bottom surface wall and by a jig which supports almost the entire upper surface of the top surface wall 82, and welded while these jigs are pressed equally, and thereby a double-walled body for a lid can be obtained. This method is preferably used because the deviation of axes between the top surface wall 82 and the top wall element 84 of the bottom surface wall can be decreased.

Next, the air inside space layer 85 of the double-walled body for a lid is evacuated via the aperture portion 84b at the bottom portion of double-walled body for a lid and then filled with a low thermoconductive gas. This operation may be carried out by employing a device which can be switched between an evacuation system attached to an evacuation pump and a supply system for supplying a low thermoconductive gas, in which packing is disposed to the ends of the pipe. This packing is pushed against the aperture portion 84b, and space layer 85 is evacuated by the evacuation system while the aperture portion 84b is blocked off from the external atmosphere. Next, the device is switched over to the low thermoconductive gas supply system, and space layer 85 is filled with a low thermoconductive gas.

Then, an adhesive such as a cyanoacrylate or acetonitrile adhesive is coated dropwise to the aperture portion 84b and the aperture portion 84b is sealed by the sealing plate 89 which is formed a gas-barrier resin. These adhesives are highly airtight after hardening and provide immediate powerful adhesion, so as to provide a reliable seal for the low thermal conductivity gas filled in the space layer 85.

Alternatively, when the top wall element of the bottom surface wall and the top surface wall are welded inside the space between the jig which supports the top wall element of the bottom surface wall and the jig which supports the top surface wall, the space being filled with a low thermoconductive gas after being evacuated, the welding and the exchange of a gas can be conducted simultaneously, and the forming of the aperture portion is not necessary.

Next, the end portion 82c of the top surface wall 82 and the end portion 83a of the bottom wall element 83 of the bottom surface wall are welded. Here, the clearance between the upper surface of the bottom wall element 83 of the bottom surface wall and the lower surface of the top wall element 84 of the bottom surface wall can be provided equally. Therefore, when the end portion 83a of the bottom wall element 83 of the bottom surface wall and the end portion 82c of the top surface wall 82 is put together, fastened by a jig which supports almost the entire lower surface of the bottom wall element 83 of the bottom surface wall and by a jig which supports almost the entire upper surface of the top surface wall 82, and then welded while these jigs are pressed equally, the constant welding strength of the end portion 82c of the top surface wall and the end portion 83a of the bottom wall element of the bottom surface wall can be achieved, and thereby the welding strength of the obtained products can be constant.

### (Example of Production)

The container 1 and the lid 21 shown in Fig. 1 were produced as follows.

The inner container 2 was injection-molded by the two-color molding machine, using polyethylene vinyl alcohol (trade name: EVAL, produced by Kuraray Chemical Co., Ltd.) as the inner layer 2a and polypropyrene as the outer layer 2b such as to be 1 mm thick respectively.

The inner wall element 3 of the outer container was injection-molded using polyethylene vinyl alcohol (trade name: EVAL, produced by Kuraray Chemical Co., Ltd.) such as to be 1 mm thick, the aperture portion 3b with 1 mm of its diameter being formed at the center of its bottom portion.

The outer wall element 4 of the outer container was injection-molded using polypropylene such as to be 1 mm thick.

Then, aluminum foil was affixed to the outer surface of the inner container 2 by means of double-sided tape.

Next, the inner container 2 was accommodated inside the inner wall element 3 of the outer container with the space layer 5 therebetween, end portions 3a, 2c were set together, the inner wall element 3 of the outer container and the inner container 2 were fastened by a jig which supports almost the entire outer surface of the inner wall element 3 of the outer container and by a jig which supports almost the entire inner surface of the inner container 2, and the end portion 3a of the inner wall element 3 of the outer container and the end portion 2c of the inner container 2 were welded by means of vibration welding (not shown in the drawings), and thereby the double-walled body was obtained.

Next, the obtained double-walled body was put inside a low thermoconductive gas exchange device (not shown in the drawings) which could be switched between an evacuation system connected to an evacuation pump and a low thermoconductive gas supply system and which had packing disposed to the ends of its pipe. The packing was pushed against the aperture portion 3b, and space layer 5 was evacuated to a pressure of around 10 Torr by the device's evacuation system with the aperture portion 3b blocked off from the external atmosphere. The device was then switched to the low thermoconductive gas supply system, and space 6 was filled with krypton gas. A cyanoacrylate adhesive was coated dropwise to the aperture portion 3b, and the aperture portion 3b was sealed by sealing plate 9 affixed to the aperture portion 3b.

Next, the end portion 2c of the inner container 2 and the end portion 4a of the outer wall element 4 of the outer container 4 were set together, the outer wall element 4 of the outer container and the inner container 2 were fastened by a jig which supports almost the entire outer surface of the outer wall element 4 and by a jig which supports almost the entire inner surface of the inner container 2, and the end portion 4a of the outer wall element 4 of the outer container and the end portion 2c of the inner container 2 were welded using a vibration welding device (not shown in the drawings).

The container 1 produced in this way demonstrates excellent gas barrier property and moisture resistance.

Next, the lid was produced as follows.

The bottom surface wall 22 was injection-molded by the two-color molding machine, using polyethylene vinyl alcohol (trade name: EVAL, produced by Kuraray Chemical Co., Ltd.) as the upper layer 22b and polypropyrene as the lower layer 22a such as to be 1 mm thick respectively.

The bottom wall element 23 of the top surface wall was injection-molded using polyethylene vinyl alcohol (trade name: EVAL, produced by Kuraray Chemical Co., Ltd.) such as to be 1 mm thick, the aperture portion 23b with 1 mm of its diameter being formed at the center of its upper portion.

The top wall element 24 of the top surface wall was injection-molded using polypropylene such as to be 1 mm thick.

Then, aluminum foil was affixed to the upper surface of the bottom surface wall by means of double-sided tape.

Next, the inner surface of the bottom surface wall was covered by the bottom wall element 23 of the top surface wall with the space layer 25 therebetween, end portions 22c, 23a were set together, the bottom wall element 23 of the top surface wall and the bottom surface wall 22 were fastened by a jig which supports almost the entire upper surface of the bottom wall element 23 of the top surface wall and by a jig which supports almost the entire lower surface of the bottom surface wall 22, and the end portion 23a of the bottom wall element 3 of the top wall element and the end portion 22c of the bottom surface wall 22 were welded by means of vibration welding, and thereby the double-walled body for a lid was obtained.

Next, the obtained double-walled body for a lid was put inside a low thermoconductive gas exchange device (not shown in the drawings) which could be switched between an evacuation system connected to an evacuation pump and a low thermoconductive gas supply system and which had packing disposed to the ends of its pipe. The packing was pushed against the aperture portion 23b, and space layer 25 was evacuated to a pressure of around 10 Torr by the device's evacuation system with the aperture portion 23b blocked off from the external atmosphere. The device was then switched to the low thermoconductive gas supply system, and space 26 was filled with krypton gas. A cyanoacrylate adhesive was coated dropwise to the aperture portion 23b, and the aperture portion 23b was sealed by sealing plate 29 affixed to the aperture portion 32b.

Next, the end portion 22c of the bottom surface wall 22 and the end portion 24a of the top wall element 24 of the top surface wall 24 were set together, the top wall element 24 of the top surface wall and the bottom surface wall 22 were fastened by a jig which supports almost the entire upper surface of the top wall element 24 of the top surface wall and by a jig which supports almost the entire lower surface of the bottom surface wall 22, and the end portion 24a of the top wall element 24 of the top surface wall and the end portion 22c of the bottom surface wall 22 were welded using a vibration welding device.

The lid 21 produced in this way demonstrates excellent gas barrier property and moisture resistance.

300 cc of hot water at a temperature of 95 °C was put into this thermally insulated container 1, which was then covered by the lid 21 and left to stand in a room with the temperature controlled to 20 ± 2 °C. After one hour, the temperature of the water was 72 °C.

## Claims

1. A thermally insulated synthetic resin container comprising an inner container, an outer container, and a thermoinsulating layer: characterized in that
the inner container is multilayer molded from different synthetic resin materials;
the outer container comprises an inner wall element and an outer wall element which covers the outside of the inner wall element;
the inner container and the inner wall element of the outer container are joined together so that the inner container is accommodated inside the inner wall element of the outer container with a space provided therebetween;
the thermoinsulating layer is formed by filling the space with at least one low thermoconductive gas selected from the group consisting of xenon, krypton, and argon; and
the outer wall element of the outer container and the inner container are joined at their end portions.

2. A thermally insulated synthetic resin container according to claim 1,
wherein the inner container is formed by two-color molding to form a bilayer consisting of an inner layer and an outer layer, the inner layer and the outer layer being formed of different synthetic resin materials; and
wherein the outer layer of the inner container and the inner wall element of the outer container are formed of a gas-barrier resin, and the inner layer of the inner container and the outer wall element of the outer container are formed of a moisture resistant resin.

3. A thermally insulated synthetic resin container according to claim 1,
wherein the inner container is formed by sandwich molding so as to have an outer layer, an inner layer, and an intermediate layer formed between the inner and outer layers, the inner and outer layers being formed of a different synthetic resin material from that forming the intermediate layer; and
wherein the inner and outer layers of the inner container and the outer wall element of the outer container are formed of a moisture resistant resin, and the intermediate layer of the inner container and the inner wall element of the outer container are formed of a gas-barrier resin.

4. A thermally insulated synthetic resin container comprising an inner container, an outer container, and a thermoinsulating layer: characterized in that
the outer container is multilayer molded from different synthetic resin materials;
the inner container comprises an outer wall element and an inner wall element which covers the inside of the outer wall element;
the outer container and the outer wall element of the inner container are joined together so that the outer wall element of the inner container is accommodated inside of the outer container with a space provided therebetween;
the thermoinsulating layer is formed by filling the space with at least one low thermoconductive gas selected from the group consisting of xenon, krypton, and argon; and
the inner wall element of the inner container and the outer container are joined at their end portions.

5. A thermally insulated synthetic resin container according to claim 4,
wherein the outer container is formed by two-color molding to form a bilayer consisting of an inner layer and an outer layer, the inner layer and the outer layer being formed of different synthetic resin materials; and
wherein the inner layer of the outer container and the outer wall element of the inner container are formed of a gas-barrier resin, and the outer layer of the outer container and the inner wall element of the inner container are formed of a moisture resistant resin.

6. A thermally insulated synthetic resin container according to claim 4,
wherein the outer container is formed by sandwich molding so as to have an outer layer, an inner layer, and an intermediate layer formed between the inner and outer layers, the inner and outer layers being formed of a different synthetic resin material from that forming the intermediate layer; and
wherein the inner and outer layers of the outer container and the inner wall element of the inner container are formed of a moisture resistant resin, and the intermediate layer of the outer container and the outer wall element of the inner container are formed of a gas-barrier resin.

7. A thermally insulated synthetic resin lid comprising a bottom surface wall, a top surface wall, and a thermoinsulating layer: characterized in that
the bottom surface wall is multilayer molded from different synthetic resin materials;
the top surface wall comprises a bottom wall element and a top wall element which covers the upside of the bottom wall element;
the bottom surface wall and the bottom wall element of the top surface wall are joined together with a space provided therebetween;
the thermoinsulating layer is formed by filling the space with at least one low thermoconductive gas selected from the group consisting of xenon, krypton, and argon; and
the top wall element of the top surface wall and the bottom surface wall are joined at their end portions.

8. A thermally insulated synthetic resin lid according to claim 7,
wherein the bottom surface wall is formed by two-color molding to form a bilayer consisting of an upper layer and a lower layer, the upper layer and the lower layer being formed of different synthetic resin materials; and
wherein the upper layer of the bottom surface wall and the bottom wall element of the top surface wall are formed of a gas-barrier resin, and the lower layer of the bottom surface wall and the top wall element of the top surface wall are formed of a moisture resistant resin.

9. A thermally insulated synthetic resin container according to claim 7,
wherein the bottom surface wall is formed by sandwich molding so as to have an upper layer, a lower layer, and an intermediate layer formed between the upper and lower layers, the upper and lower layers being formed of a different synthetic resin material from that forming the intermediate layer; and
wherein the upper and lower layers of the bottom surface wall and the top wall element of the top surface wall are formed of a moisture resistant resin, and the intermediate layer of the bottom surface wall and the bottom wall element of the top surface wall are formed of a gas-barrier resin.

10. A thermally insulated synthetic resin lid comprising a bottom surface wall, a top surface wall, and a thermoinsulating layer: characterized in that
the top surface wall is multilayer molded from different synthetic resin materials, and
the bottom surface wall comprises a top wall element and a bottom wall element which covers the bottom side of the top wall element;
the top surface wall and the top wall element of the bottom surface wall are joined together with a space provided therebetween;
the thermoinsulating layer is formed by filling the space with at least one low thermoconductive gas selected from the group consisting of xenon, krypton, and argon; and
the bottom wall element of the bottom surface wall and the top surface wall are joined at their end portions.

11. A thermally insulated synthetic resin lid according to claim 10,
wherein the top surface wall is formed by two-color molding to form a bilayer consisting of an upper layer and a lower layer, the upper layer and the lower layer being formed of different synthetic resin materials; and
wherein the lower layer of the top surface wall and the top wall element of the bottom surface wall are formed of a gas-barrier resin, and the upper layer of the top surface wall and the bottom wall element of the bottom surface wall are formed of a moisture resistant resin.

12. A thermally insulated synthetic resin container according to claim 10,
wherein the top surface wall is formed by sandwich molding so as to have an upper layer, a lower layer, and an intermediate layer formed between the upper and lower layers, the upper and lower layers being formed of a different synthetic resin material from that forming the intermediate layer; and
wherein the upper and lower layers of the top surface wall and the bottom wall element of the bottom surface wall are formed of a moisture resistant resin, and the intermediate layer of the top surface wall and the top wall element of the bottom surface wall are formed of a gas-barrier resin.
